(19) Europäisches Patentamt
European Patent Office
Office européen des brevets

(11) **EP 1 214 631 B2**

(12) **NEUE EUROPÄISCHE PATENTSCHRIFT**
Nach dem Einspruchsverfahrens

(45) Veröffentlichungstag und Bekanntmachung des Hinweises auf die Entscheidung über den Einspruch:
**13.08.2008 Patentblatt 2008/33**

(45) Hinweis auf die Patenterteilung:
**04.08.2004 Patentblatt 2004/32**

(21) Anmeldenummer: **00972595.3**

(22) Anmeldetag: **11.09.2000**

(51) Int Cl.:
***G05B 17/02*** *(2006.01)*

(86) Internationale Anmeldenummer:
**PCT/DE2000/003143**

(87) Internationale Veröffentlichungsnummer:
**WO 2001/022178 (29.03.2001 Gazette 2001/13)**

(54) **VERFAHREN, ANORDNUNG UND COMPUTERPROGRAMM-ERZEUGNIS ZUR SIMULATION EINES TECHNISCHEN SYSTEMS**

METHOD, ARRANGEMENT AND A PRODUCT OF A COMPUTER PROGRAM FOR SIMULATING A TECHNICAL SYSTEM

PROCEDE, DISPOSITIF ET PRODUIT PROGRAMME D'ORDINATEUR POUR LA SIMULATION D'UN SYSTEME TECHNIQUE

(84) Benannte Vertragsstaaten:
**DE FR GB**

(30) Priorität: **20.09.1999 DE 19945015**

(43) Veröffentlichungstag der Anmeldung:
**19.06.2002 Patentblatt 2002/25**

(73) Patentinhaber: **SIEMENS AKTIENGESELLSCHAFT**
**80333 München (DE)**

(72) Erfinder:
• **STURM, Thomas**
**81673 München (DE)**
• **MÄRKER, Wolfgang**
**91330 Eggolsheim (DE)**
• **HILLERMEIER, Claus**
**83236 Übersee (DE)**

(56) Entgegenhaltungen:
WO-A-95/02213          DE-A- 3 839 675
DE-A- 4 009 200      DE-A- 4 338 615
US-A- 5 311 421

• X.LEI ET AL: "OPTIMIZATION-A NEW TOLL IN A SIMULATION PROGRAM SYSTEM" IEEE TRANSACTIONS ON POWER SYSTEMS, Bd. 12, Nr. 2, Mai 1997 (1997-05), Seiten 598-604, XP000955372 USA
• J.ROWLAND: "OPTIMAL DIGITAL SIMULATIONS FOR RANDOM LINEAR SYSTEMS WITH INTEGRATION CONSTANTS" COMPUTERS AND ELECTRICAL ENGINEERING, Bd. 1, Nr. 1, Juni 1973 (1973-06), Seiten 111-118, XP000979920 UK

• S.H. Jacobson & L. Schruben: "A harmonic analysis approach to simulation sensitivity analysis", IIE Transactions (1999) Vol. 31, No 3, pp. 231-243
• O. Föllinger: "Regelungstechnik", 2. Aufl., Elitera-Verlag, Berlin 1978
• M. Hossein Safizadeh: "Optimation in Simulation: Current Issues and the Future Outlook", Naval Research Logistics, Vol. 37 (1990), pp. 807-825
• Y. Carson & A. Maria: " Simulation optimization: methods and applications", Proceedings of the Winter Simulation Conference, pp. 118- 126
• M. Ritzschke & T. Wiedemann: "Gewinnung und Aufbereitung von Simulationsdaten zu Vergleichszwecken", 12. Symposium Simulationstechnik, Zürich, September 1998, in: M. Engell & V. Hrdliczka (Hrsg.): Fortschritte der Simulationstechnik, Tagungsverband, vdf Hochschulverlag AG an der ETH Zürich, S. 283-290
• G. Ewans et. al.: "Multicriteria optimization of simulation models", Proceedings of the 1991 Winter Simulation Conference, pp. 894-900
• Ch. Standridge et.al.: "Integrated simulation support system concepts and examples, pp. 141-160
• S.H. Jacobson & L. Schruben: "Techniques for simulation response optimization", Operation Research Letters, Vol. 8, No. 1 (1989), pp. 1-9
• W. Chen et.al.: "Robust design for improved vehicle handling under a range of maneuver conditions", Proceedings of the 1999 ASME Design Engineering Technical Conferences, September 12-15, 1999, Sas Vegad, Nevada, pp. 1-11

**Beschreibung**

Die Erfindung betrifft ein Verfahren, eine Anordnung und ein Computerprogramm-Erzeugnis zur Simulation eines technischen Systems.

Zu einer Optimierung eines technischen Systems, insbesondere zu einer globalen Optimierung, sind verschiedene Ansätze bekannt [1]. Handelt es sich bei dem zu optimierenden System um ein komplexes, analytisch kaum bzw. überhaupt nicht beschreibbares Gebilde, so wird häufig eine Simulation für eine bestimmte Auslegung des technischen Systems durchgeführt. Bei einer solchen Simulation wird abhängig von einer Vielzahl von Einstellparametern eine Auslegung bzw. eine Reaktion des technischen Systems errechnet. Durch eine Vielzahl von Einstellparametern und eine immense Anzahl an Rechenoperationen, die aus den Belegungen der Einstellparameter die Auslegung des technischen Systems für diese Einstellparameter ermittelt, ist ein gewaltiger Rechenaufwand notwendig. Faßt man alle möglichen interessierenden Einstellparameter in einen sogenannten Parametervektor x zusammen, so ergibt sich für jede Belegung dieses Parametervektors in einer Dimension n eine Simulationsantwort y der Dimension m.

Im Rahmen der (globalen) Optimierung wird hinsichtlich einer Zielfunktion $f$ eine möglichst gute Auslegung bzw. Einstellung des technischen Systems ermittelt. Nun können aber zusätzlich zu den für das technische System vorgesehenen Einstellparametern, die im Laufe einer Optimierungsrechnung variiert werden können, noch sogenannte Einstellkonstanten auftreten, die entsprechend während der Optimierungsrechnung nicht variiert werden können und daher keine Variablen (=Veränderlichen) im Sinne der Optimierung sind. Dennoch sind diese Einstellkonstanten von großer Bedeutung, da sie Einfluß auf die Zielfunktion haben. Ein Beispiel für derartige Einstellkonstanten sind Kostenkonstanten, die unter Umständen im Laufe der Zeit mehr oder minder stark variieren. Ab einer gewissen Veränderung der Kostenkonstanten ergibt sich im Rahmen der Optimierung, falls Kosten in die Zielfunktion eingehen, ein verändertes Ergebnis. Nun ist es von großem Nachteil, bei Veränderung der Kostenkonstanten erneut die Simulation, wie oben beschrieben, zu durchlaufen und damit erneut den gewaltigen Rechenaufwand zu verursachen.

Die Druckschrift [3] offenbart ein Simulationsprogramm, mit dem eine Optimierung durchgeführt werden kann, bei der ein mit Hilfe von Objektfunktionen und Einstellkonstanten modelliertes Optimierungsproblem gelöst wird, wobei Parameter zur Steuerung des Optimierungsprozesses sowie Konvergenzkriterien in einer Eingabedatei definiert werden.

Das Dokument [4] beschreibt den Einsatz von Optimierungsverfahren zur Ermittlung von optimalen digitalen Simulationen für lineare Zufallssysteme mit Integrationsbeschränkungen.

Die Aufgabe der Erfindung besteht darin, eine Simulation eines technischen Systems zu ermöglichen, ohne dass unnötige zeitaufwändige Simulationsschritte mehrfach ausgeführt werden müssen, und zudem wird die Sensitivität der Optima (der einstellbaren Parameter) gegenüber Veränderungen der vorgegebenen Einstellkonstanten ermittelt.

Diese Aufgabe wird gemäß den Merkmalen der unabhängigen Patentansprüche gelöst. Weiterbildungen ergeben sich auch aus den abhängigen Ansprüchen.

Zur Lösung dieser Aufgabe wird ein Verfahren zur Simulation eines technischen Systems entsprechend Anspruch 1 angegeben.

Hierbei wird die Ermittlung des Wertes der Zielfunktion aufgeteilt in die Ermittlung des Einflusses der Einstellparameter auf das technische System und eine Bestimmung des Einflusses der Einstellkonstanten auf das technische System. Somit ist es möglich, die zeitaufwändige und rechenintensive Anfrage an die externe Quelle dahingehend zu optimieren, dass insbesondere einmal bestimmte Ergebnisse für weitere Simulationszwecke wiederverwendbar sind.

Eine Weiterbildung besteht darin, dass anhand der Simulation ein Entwurf des technischen Systems durchgeführt wird. Insbesondere kann dabei

- ein Neuentwurf,
- eine Anpassung,
- eine Auslegung oder
- eine Steuerung

des technischen Systems erfolgen. Bei dem Neuentwurf handelt es sich bevorzugt um eine Neuschaffung des technischen Systems, zum Beispiel einer Anlage der Verfahrenstechnik, einer Schaltung oder eines Softwaresystems. Die Anpassung umfasst eine Veränderung eines bestehenden Systems, zum Beispiel im Hinblick auf einen verbesserten Betrieb. Auslegung kann sowohl eine Dimensionierung oder eine Einstellung von Komponenten, zum Beispiel physikalischer Abmessungen von Teilen eines technischen Systems, sein. Schließlich ermöglicht die Steuerung eine effiziente Einstellung der veränderbaren Einstellparameter des Systems, so dass insbesondere ein möglichst effizienter Betrieb gewährleistet sein kann.

Eine Ausgestaltung besteht darin, daß eine erneute Bestimmung des Einflusses der Einstellparameter auf das technische System durch Zugriff auf das zwischengespeicherte Ergebnis bestimmt wird. Durch diesen Schritt der Zwischenspeicherung werden deutlich Rechenleistung und Zeit eingespart.

Eine andere Weiterbildung besteht darin, daß für eine Vielzahl von Belegungen der Einstellparameter jeweils deren Einfluß auf das technische System durch Anfrage an die externe Quelle ermittelt und das Ergebnis dieser Anfrage zwischengespeichert werden. Hierbei ist es von Vorteil, daß bei mehrere Anfragen mehrere Ergebnisse resultieren, deren Zwischenspeichern eine (mehrdimensionale) Ebene in einem (mehrdimensionalen) Raum bestimmt. Diese Ebene ist umso genauer bestimmt, je mehr Anfragen an die externe Quelle (z.B. den Simulator) gerichtet werden. Ist die Ebene hinreichend genau bestimmt, d.h. hat sie ausreichend viele Stützstellen, so können weitere (mehrdimensionale) Punkte auf dieser Ebene auch ohne Anfrage durch Interpolation oder Extrapolation ermittelt werden. Ein derartiges Verfahren der Inter-/Extrapolation ist in der Regel wesentlich weniger zeit- und rechenintensiv als die Bestimmung mittels Simulator.

Auch ist es eine Weiterbildung, daß zunächst mehrere Ergebnisse bestimmt und zwischengespeichert werden. Daraufhin können zusätzliche Punkte ohne erneute Anfrage an die externe Quelle mittels eines neuronalen Netzes bestimmt werden, wobei dem neuronalen Netz die gespeicherten Ergebnisse als eine Trainingsmenge bereitgestellt werden. Ein solches neuronales Netz kann insbesondere als ein Mehrschichten-Perzeptron (siehe [2]) ausgeführt sein.

Die Anfrage an die externe Quelle kann insbesondere dergestalt sein, daß die externe Quelle selbst ein aufwendiges Simulationsprogramm darstellt, anhand dessen, abhängig von der Belegung der Einstellparameter, ein Ergebnis der Auslegung bzw. näheren Beschreibung der technischen Anlage berechnet wird. Eine Alternative besteht darin, daß die Anfrage an die externe Quelle durch ein Experiment befriedigt wird.

Eine andere Ausgestaltung besteht darin, daß die Simulation mit einer Vielzahl von Ergebnissen ohne eine erneute Anfrage an die externe Quelle durchgeführt wird. Insbesondere kann mit der zwischengespeicherten mehrdimensionalen Beschreibung der bereits ermittelten Ergebnisse auf erfolgte Anfragen eine weitere Simulation durchgeführt werden, ohne daß es des aufwendigen Mechanismus der Bestimmung von Ergebnissen in Form der externen Quelle bedarf.

Das oben beschriebene Verfahren wird zur Simulation eines technischen Systems im Rahmen einer Sensitivitätsanalyse eingesetzt. Dabei wird die Sensitivität der Optima (der einstellbaren Parametern) gegenüber Veränderungen der vorgegebenen Einstellkonstanten ermittelt.

Entsprechend Anspruch 11 wird eine Anordnung zur Simulation eines technischen Systems angegeben, mit einer Prozessoreinheit und mit einem Speicher, auf dem ein Programm gespeichert ist, welches bei seiner Ausführung auf der Prozessoreinheit ein Verfahren durchführt, bei dem

(a) in einem Optimierungsschritt für eine Zielfunktion, die abhängt von Einstellparametern zur Auslegung bzw. Reaktion des technischen Systems und von vorgegebenen Einstellkonstanten, die während der Optimierung nicht variiert werden können, die Einstellparameter optimiert werden;
(b) abhängig von einer vorgegebenen Belegung der Einstellparameter anhand einer Anfrage an eine externe Quelle ein Ergebnis in Form eines Einflusses der Einstellparameter auf das technische System bestimmt wird;
(c) das Ergebnis zwischengespeichert wird;
(d) anhand des Ergebnisses und der Einstellkonstanten das technische System simuliert wird.

Enstprechend Anspruch 12 wird ein Computerprogramm-Erzeugnis zur Lösung der Aufgabe angegeben, mit einem Speicher, auf dem ein Programm gespeichert ist, welches bei seiner Ausführung auf einem Rechner ein Verfahren durchführt, bei dem:

(a) in einem Optimierungsschritt für eine Zielfunktion, die abhängt von Einstellparametern zur Auslegung bzw. Reaktion des technischen Systems und von vorgegebenen Einstellkonstanten, die während der Optimierung nicht variiert werden können, die Einstellparameter optimiert werden;
(b) abhängig von einer vorgegebenen Belegung der Parameter anhand einer Anfrage an eine externe Quelle ein Ergebnis in Form eines Einflusses der Parameter auf das technische System bestimmt wird;
(c) das Ergebnis zwischengespeichert wird;
(d) anhand des Ergebnisses und der Einstellkonstanten das technische System simuliert wird.

Die Anordnung sowie das Computerprogramm-Erzeugnis sind insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnungen dargestellt und erläutert.

Es zeigen

**Fig.1** ein Verfahren zur Simulation eines technischen Systems;

**Fig.2** ein Verfahren zur Simulation eines technischen Systems mit einer Zwischenspeicherung;

Fig.3 ein Verfahren zur Simulation eines technischen Systems mit einer automatisierten Gitterabtastung;

Fig.4    ein Verfahren zur Simulation mit Nutzung einer Simulationsdatenbank;

Fig.5    eine Prozessoreinheit.

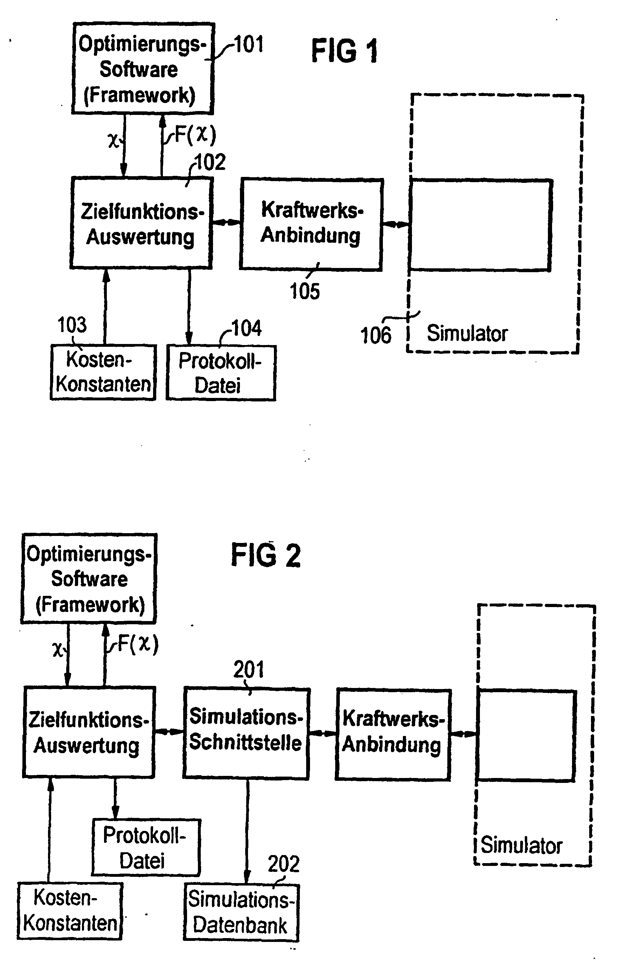

In **Fig.1** ist ein Verfahren zur Simulation eines technischen Systems, insbesondere eines Kraftwerks, dargestellt. Eine Zielfunktionsauswertung 102 hängt ab von Ergebnissen einer externen Quellen, hier einem externen Simulator 106, der über eine Schnittstelle "Kraftwerksanbindung" 105 angebunden ist. Ferner hängt die Zielfunktionsauswertung 102 von Einstellungskonstanten, hier Kostenkonstanten 103 ab. Es ergibt sich somit folgender Zusammenhang:

$$f_{\alpha,\beta,\dots}(\mathbf{x}) = F_{\alpha,\beta,\dots} \circ \underbrace{\phi(\mathbf{x})}_{y \in \mathbb{R}^{n+m}}, \mathbf{x} \in \mathbb{R}^n. \tag{1}$$

Hierbei bezeichnet $f$ die Zielfunktion, die von den Kostenkonstanten $\alpha$, $\beta$,... abhängt und aufgespalten wird in einen Anteil F, in den die Kostenkonstanten einfließen und in einen Anteil $\phi$, der die Parameter $x = (x_1, x_2, \dots , x_n)^T$ umfaßt, die im Rahmen der Optimierung beeinflußbar sind. Das Zeichen "o" bedeutet in obiger Formel (1) eine nacheinander-Ausführung zweier Funktionen.

In einer Optimierung 101 erfolgt eine (globale) Optimierung der von der Zielfunktionsauswertung 102 bereitgestellten Zielfunktion $f$. Das Ergebnis der Optimierung 101 dient insbesondere für eine neue Eingabe in die Zielfunktion, so daß unter Berücksichtigung der Kostenkonstanten 103 eine erneute Optimierung 101 erfolgen kann. Insbesondere wird dieses Verfahren solange iteriert, bis eine vorgegebene Güte erreicht wurde oder eine weitergehende Verbesserung zwischen den letzten Iterationen nicht signifikant ist. Vorzugsweise werden Ergebnisse der Zielfunktionsauswertung 102 in einer Protokolldatei 104 abgespeichert.

**Fig.2** erweitert Fig.1 derart, daß eine Simulationsschnittstelle 201 mit einer Simulationsdatenbank 202 eingefügt ist. Die Simulationsschnittstelle 201 bewirkt, daß das Ergebnis jeder Anfrage an die externe Quelle, hier über die Kraftwerksanbindung 105 and den Simulator 106, in der Simulationsdatenbank zwischengespeichert wird. Sollte zu einem späteren Zeitpunkt die gleiche Anfrage an den Simulator 106 vorliegen, so muß dieser nicht noch einmal den zeitaufwendigen Berechnungsvorgang starten, sondern es kann direkt auf die bereits in der Simulationsdatenbank 202 abgespeicherten Ergebnisse zugegriffen werden. Hierbei ist zu bemerken, daß die Kostenkonstanten 103 in der Zielfunktionsauswertung 102 mit dem Ergebnis der Anfrage verrechnet werden. Diese Aufgliederung der Zielfunktion gemäß Gleichung (1) stellt sicher, daß auch bei einer Veränderung der Kostenkonstanten eine schnelle und effiziente Berechnung (und Optimierung) der Zielfunktion möglich ist, wobei für die bereits ermittelten Belegungen der Parameter x nicht erneut der Simulator 106 angestoßen werden muß.

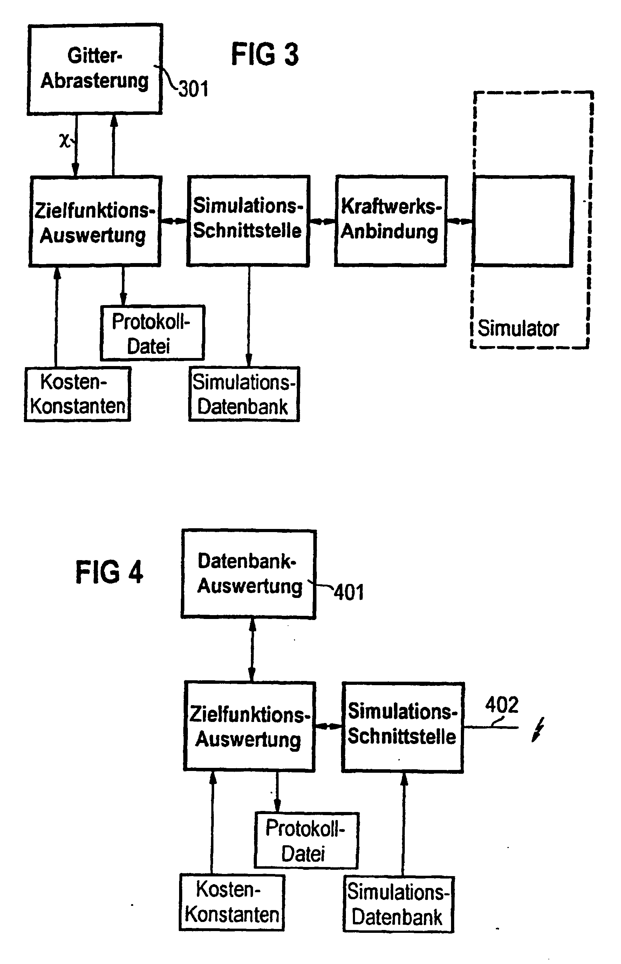

In **Fig.3** ist ein automatisiertes Verfahren zur systematischen Belegung der Simulationsdatenbank 202 gezeigt. Mit einer Gitterabtastung 301 ist es möglich, für ausgezeichnete (mehrdimensionale) Punkte x im Raum der Parameter gezielt über die Simulationsschnittstelle 201, die Kraftwerksanbindung 105 und den Simulator 106 Ergebnisse y zu ermitteln und diese Ergebnisse in der Simulationsdatenbank abzuspeichern. Der Vorteil besteht darin, daß anhand der systematisch bestimmten Punkte ein "Gittet" entsteht, das - je nach Anwendungsfall - mehr oder weniger dicht ist. Mit diesem Gitter können Zwischenwerte durch Interpolation oder Extrapolation bestimmt werden, ohne daß dadurch eine Anfrage an den Simulator 106 notwendig wäre. Es ergibt sich also mit dem Gitter eine Grundstruktur, die bei der weiteren Optimierung, auch ohne den Simulator 106, hilfreich sein kann.

**Fig.4** zeigt den Fall nach der abgeschlossenen Gitterabtastung. Hier ist der Simulator 106 nicht länger notwendig (angedeutet durch die unterbrochene Verbindungslinie 402). So kann bspw. ohne Anbindung an den Simulator 106 und ohne dessen zeitaufwendige Berechnungen eine Simulation bzw. Optimierung erfolgen. Ein Block 401 kennzeichnet die Auswertung der in der Simulationsdatenbank gesammelten und/oder inter-/extrapolierten Ergebnisse.

**Auslegungsoptimierung von Kraftwerken**

Bei der Auslegungsoptimierung von Gas-und-Dampf-Kraftwerken (GuD-Kraftwerke) werden Auslegungspunkte gesucht, die zu minimalen Stromerzeugungskosten führen. Die Stromerzeugungskosten bilden die Zielfunktion $f$, deren Minimum gesucht ist. Nun hängen die Stromerzeugungskosten nicht nur von den auszulegenden Größen des Kraftwerks (=Parameter, Einstellparameter), die im folgenden zum Variablenvektor x zusammengefaßt sind, ab. Vielmehr gehen in diesen funktionalen Zusammenhang eine Reihe von Einstellungskonstanten (hier: Kostenkonstanten, Kostenparameter; z.B. Steigungen von Kostenkurven) ein. Je nach Wert dieser Kostenkonstanten ergeben sich unter Umständen andere Auslegungsoptima $x_{opt}$ für das technische System, hier das GuD-Kraftwerk.

Nun sind die Werte dieser Kostenkonstanten

a) in den meisten Fällen nicht exakt ermittelbar, d.h. mit einer (meist nur grob abschätzbaren) Unsicherheit behaftet, und

b) in einigen Fällen (z.B. Brennstoffpreis) nicht universell für alle derzeitigen Kraftwerkangebote gültig, sondern regional verschieden.

Zur Beurteilung eines Auslegungsoptimums ist es wichtig, abschätzen zu können, ob dieses Auslegungsoptimum, das unter Annahme eines bestimmten Wertes $k_0$ (im weiteren als Hauptwert bezeichnet) des Kostenparameters $k$ ermittelt wurde und das daher mit $x_{k_0}$ bezeichnet wird, auch noch für benachbarte Werte $k_0 \pm \Delta k$ optimal ist. Diese Sensitivität des Auslegungsoptimums gegenüber der Variation von Kostenparametern zu ermitteln wird nachfolgend eingehend beschrieben.

Dabei werden zwei Aspekte untersucht:

1) Wie verändert sich das Auslegungsoptimum, wenn ein Kostenparameter um seinen Hauptwert $k_0$ herum um 50% nach unten und nach oben variiert wird? Würde man den Kostenparameter $k$ kontinuierlich variieren, so erhielte man als Antwort auf diese Frage eine durch k parametrisierte Kurve $x_k$ von Auslegungsoptima.

2) Wie oben skizziert, hängen die Stromerzeugungskosten $f$ von den Auslegungsgrößen x und von dem Wert des Kostenparameters $k$ ab:

$$f = f(\mathbf{x}, k)$$

(Zur Vereinfachung wird hier nur ein Kostenparameter $k$ dargestellt). Die unter 1) beschriebene Untersuchung liefert eine funktionale Abhängigkeit der Stromerzeugungskosten von dem Kostenparameter $k$, die sich ergibt, wenn für jeden aktuellen Wert von $k$ die an $k_{aktuell}$ angepaßte Auslegung $x_{k_{aktuell}}$ gewählt wird:

$$f_{opt}(k_{aktuell}) := f(x_{k_{aktuell}}, k_{aktuell}).$$

In vielen Fällen ist aber eine Anpassung der Auslegung x an den Wert des Kostenparameters $k$ nicht erwünscht, sondern die für den Hauptwert $k_0$ optimierte Auslegung $x_{k_0}$ soll auch unter veränderten Kostenbedingungen, also für ein ganzes Werte-Intervall

$$[k_0 - \Delta k, \; k_0 + \Delta k]$$

des Kostenparameters $k$, beibehalten werden. Bei dieser Vorgehensweise erhält man eine andere funktionale Abhängigkeit der Stromerzeugungskosten vom Wert

$$k_{aktuell}: f_{x_{k_0}}(k_{aktuell}) := f(x_{k_0}, k_{aktuell}).$$

Naturgemäß hat ein solches Festhalten an der Auslegung $x_{k_0}$ zur Folge, daß bei einem tatsächlichen Wert $k_{aktuell}$ ein gewisses Optimierungspotential ungenutzt bleibt. Dieses Optimierungspotential entspricht den mit einer Standardauslegung $x_{k_0}$ verbundenen Mehrkosten und wird daher (als Funktion von $k_{aktuell}$) quantifiziert durch

$$f_{x_{k_0}}(k_{aktuell}) - f_{opt}(k_{aktuell}).$$

Die nähere Untersuchung der genannten Aspekte beruht auf folgender Vorgehensweise:

(i) Zur Bestimmung einer "Standardauslegung" $x_{k_0}$ wurden sämtliche Kostenparameter auf ihren Hauptwert ko

gesetzt. $x_{k_0}$ ist der Minimierer der Zielfunktion (= Stromerzeugungskosten) $f(x, k_0)$ [bei festgehaltenem $k_0$].

(ii) Jeder einzelne der als relevant identifizierten Kostenparameter wird untersucht. Dabei werden jeweils alle anderen Kostenparameter auf ihrem Hauptwert festgehalten, während der zu untersuchende Parameter, $k$ genannt, innerhalb eines symmetrisch um seinen Hauptwert $k_0$ angeordneten Intervalls

$$[k_0 - \Delta k, \ k_0 + \Delta k]$$

in kleinen Schritten $\delta k$ abgestuft wird:

$$k_{aktuell} = k_0 - \Delta k, \ k_0 - \Delta k + \delta k, \ k_0 - \Delta k + 2 \cdot \delta k, \ ..., \ k_0, ..., \ k_0 + \Delta k.$$

Die Intervallbreite wird (für fast alle untersuchten Parameter $k$) zu

$$\Delta k = 50\% \cdot k_0,$$

die Raster-Schrittweite zu

$$\delta k = 5\% \cdot k_0$$

gewählt.
Für jeden der Rasterwerte $k_{aktuell}$ wird der folgende Schritt (iii) durchgeführt.

(iii) Bestimme die an $k_{aktuell}$ angepaßte optimale Auslegung $x_{k_{aktuell}}$ durch Minimierung der Zielfunktion (= Stromerzeugungskosten) $f(x, k_{aktuell})$ [bei festgehaltenem $k_{aktuell}$]. Berechne durch Einsetzen von $x_{k_{aktuell}}$ bzw. von $x_{k_0}$ in die Zielfunktion $f(., k_{aktuell})$ die Werte $f_{opt}(k_{aktuell})$ bzw. $f_{x_{k0}}(k_{aktuell})$.
Die Abfolge der Punkte $x_{k_{aktuell}}$ für alle Rasterschritte des $k$-Intervalls ist eine diskretisierte Version der gesuchten Kurve $x_k$ von Auslegungsoptima [siehe Aspekt 1].
Analog stellt die Abfolge der Differenzen $f_{opt}(k_{aktuell}) - f_{x_{k0}}(k_{aktuell})$ eine diskretisierte Version der Funktion "Mehrkosten beim Festhalten an der Standardauslegung $x_{k_0}$" (in Abhängigkeit von $k_{aktuell}$) dar [siehe Aspekt 2].

Ein Beispiel aus der Praxis zeigt, daß im Rahmen der Kraftwerksoptimierung mit 25 zu untersuchenden Kostenparameter bei jeweils 20 Rasterstufen insgesamt gemäß Schritt (iii) 500 Optimierungsrechnungen zur Ermittlung von $x_{k_{aktuell}}$ durchzuführen sind. Angesichts des Rechenzeitbedarfs pro Auslegungsoptimierung von ca. 1 Tag, der durch die zahlreichen (einige 100) dafür benötigten Anfragen an den Simulator 106 entsteht, ist es wenig ökonomisch, für Schritt (iii) jeweils im vollen reellwertigen Raum der Auslegungsvariablen zu optimieren. Als Ausweg wurde eine Diskretisierung des Suchraums vorgenommen, die nachfolgend erläutert wird.

**Gitterkonzept**

**Bestimmung der unabhängigen Freiheitsgrade**

Resultate von Optimierungsrechnungen wie auch Höhenlinienplots der Zielfunktion für ausgewählte Schnitteebenen durch diesen hochdimensionalen Variablenraum legen die Schlußfolgerung nahe, daß die Auslegungsoptima in dem oben definierten Variablenraum keine isolierten Punkte sind, sondern eine mehrdimensionale Untermannigfaltigkeit bilden. Dies wiederum ist ein Indiz dafür, daß die Auslegungsvariablen nicht wirklich alle voneinander unabhängig, sondern teilweise durch physikalische Beziehungen miteinander verknüpft sind. Die Zahl der Freiheitsgrade für die Optimierung kann somit reduziert werden.
Wie oben erläutert, soll im Zuge der Sensitivitätsanalyse die Wanderung von Auslegungsoptima berechnet werden. Hierfür werden isolierte Optima statt ganzer Optimums-Mannigfaltigkeiten benötigt. Zur Ermittlung der wirklich unabhängigen Freiheitsgrade bei der GuD-Auslegung werden gezielt weitere Schnittebenen in dem obigen Variablenraum definiert. Die Analyse der Höhenlinienplots der Stromerzeugungskosten auf diesen Schnittebenen führt häufig dazu, daß das globale Optimum der Stromerzeugungskosten - näherungsweise - in einem reduzierten Suchraum (d.h. einem Teilraum des oben benannten Variablenraums) liegt.

**Konzept einer Simulationsdatenbank**

Jede Auswertung der Zielfunktion $f(x, k_{aktuell})$ wird zweistufig durchgeführt:

(1) In Abhängigkeit des Wertes x der Auslegungsvariablen werden per Anfrage an den Simulator 106 eine ganze Reihe von thermodynamischen und geometrischen Größen berechnet, die eine Auslegung charakterisieren. Diese Größen werden im weiteren zum Vektor s der Simulationsdaten zusammengefaßt: s = s(x).

(2) Aus den Simulationsdaten s(x) wird in Abhängigkeit der Kostenparameterkonstellation $k_{aktuell}$ der Wert der Zielfunktion (d.h. der Stromerzeugungskosten) berechnet.

Das Konzept einer Simulationsdatenbank unterteilt die Zielfunktionsberechnung in zwei voneinander unabhängige Programme.

**Programm 1** startet für beliebig vorgegebene Variablenpunkte $x_i$ jeweils eine Anfrage an den Simulator 106 und speichert die Simulationsergebnisse $s(x_i)$ in der Simulationsdatenbank 202, die vorzugsweise als Datei mit spezifischem Format realisiert ist. Für dieses Programm spielen die Kostenparameter keine Rolle.

**Programm 2** berechnet bei einer gegebenen Kostenparameterkonstellation $k_{aktuell}$ für alle in der Simulationsdatenbank 202 hinterlegten Simulationsdaten s - und damit für alle diesen Simulationsdaten zugrundeliegenden Variablenwerte x - den Wert der Zielfunktion $f(x, k_{aktuell})$.

In Kombination mit dem Gitterkonzept ergibt sich folgendes Vorgehen:

- Mittels des Programms 1 wird vorab die Simulationsdatenbank mit Gitterpunkten angelegt.

- Für jede durchzuspielende Kostenparameterkonstellation $k_{aktuell}$ werden mittels des Programms 2 die Zielfunktionswerte $f(x, k_{aktuell})$ aller Gitterpunkte berechnet. Der Gitterpunkt mit dem kleinsten Zielfunktionswert wird als Optimum notiert.

**Bedeutung der Kostenparameter**

Die Auslegungsoptimierung erfolgt mit Ziel, die Stromerzeugungskosten zu minimieren:

$$\text{Stromerzeugungskosten} = \frac{\text{Investitionskosten} \cdot \text{Annuität}}{P_{elek,GuD,netto} \cdot h_{Jahr}} + \frac{b}{\eta_{GuD}}.$$

Der Term "Investitionskosten" setzt sich aus den Kosten der drei von den Auslegungsentscheidungen hauptsächlich betroffenen Einzelgewerke

- Kaltes Ende,

- Dampfturbine,

- Heizflächen des Abhitzekessels und

- den Kosten der summarisch als "Restkraftwerk" bezeichneten restlichen Kraftwerkteile

zusammen:

$$\text{Investitionskosten} = \text{Kosten}_{\text{Kaltes Ende}} + \text{Kosten}_{\text{Turbine}}$$

$$+ \text{Kosten}_{\text{HZFL,GuD}} + \text{Kosten}_{\text{Restkraftwerk}}$$

Bei einer weiteren Aufschlüsselung dieser einzelnen Investitionskostenterme werden die Kostenparameter sichtbar, die diese Kostenterme - im Zusammenspiel mit den Auslegungsvariablen - beeinflussen:

**(A) Kaltes Ende**

$$\text{Kosten}_{\text{Kaltes Ende}} = \text{Kosten}_{\text{Kühlsystem: Leitungen/Pumpen}} + \text{Kosten}_{\text{Kondensator}}$$

$$+ \text{Kosten}_{\text{Kühlturm}}$$

$$\text{Kosten}_{\text{Kühlsystem: Leitungen/Pumpen}} = \quad \dot{m}_{\text{Kühlwasser}} \cdot \text{Preis}_{\text{kg/s,Kühlwasser}}$$
$$+ \text{Grundpreis}_{\text{Kühlsystem: Leitungen/Pumpen}}$$
$$\text{Kosten}_{\text{Kondensator}} = \quad \text{Fläche}_{\text{Kondensator}} \cdot \text{Preis}_{\text{m2,Kondensator}}$$
$$+ \text{Grundpreis}_{\text{Kondensator}}$$
$$\text{Kosten}_{\text{Kühlturm}} = \quad \text{Basisfläche}_{\text{Kühlturm}} \cdot \text{Preis}_{\text{m2,Kühlturm}}$$
$$+ \text{Grundpreisi}_{\text{Kühlturm}}$$

Die Kosten des Kalten Endes werden also entscheidend von den Werten der drei Kostenparameter

- spezifische Kosten des Kühlsystems ($\text{Preis}_{kg/s,\text{Kühlwasser}}$),
- Preis pro Quadratmeter Kondensatorfläche ($\text{Preis}_{\text{m2,Kondensator}}$) und
- Preis pro Quadratmeter Kühlturmbasisfläche ($\text{Preis}_{m2,\text{Kühlturm}}$)

beeinflußt.

**(B) Dampfturbine**
Um zu modellieren, wie die Kosten der Dampfturbine von der HD-Temperatur und dem HD-Druck abhängen, wird um einen Referenz-Auslegungspunkt herum linearisiert:

$$\text{Kosten}_{\text{Turbine}} = \text{Kosten}_{\text{Turbine,Referenz}}$$

$$\cdot (1 + \text{Korrektursummand}_{\text{Turbine,}\Delta p}$$

$$+ \text{Korrektursummand}_{\text{Turbine,}\Delta T})$$

$$\text{Korrektursummand}_{\text{Turbine,}\Delta T}$$

$$= \text{KorrTurb}_{\Delta T,\text{Steigung}} \cdot (T_{\text{HD}} - T_{\text{HD,Referenz}})$$

$$\text{Korrektursummand}_{\text{Turbine,}\Delta p} = \text{KorrTurb}_{\Delta p,\text{Steigung}} \cdot (p_{\text{HD}} - p_{\text{HD,Referenz}})$$

Die Turbinenkosten hängen also von den drei Kostenparametern

- Turbinenkosten bei Referenzauslegung ($\text{Kosten}_{\text{Turbine,Referenz}}$)
- Temperaturabhängigkeit der Turbinenkosten ($\text{KorrTurb}_{\Delta T,\text{Steigung}}$)
- Druckabhängigkeit der Turbinenkosten ($\text{KorrTurb}_{\Delta p,\text{Steigung}}$)

ab.

**(C) Heizflächen**

Um die Kosten der gesamten Heizflächen einer Multishaft-Anlage zu erhalten, sind die Kosten der Einzelkessel (baugleich) zu summieren:

$$\text{Kostenn}_{HZFL,GuD} = \text{Kosten}_{HZFL,Kessel} \cdot \text{Anzahl}_{Kessel}$$

Die Kosten eines Einzelkessels setzen sich zusammen aus

- einem Sockelbetrag, dem Kostenparameter "Sockelbetrags der Heizflächenkosten pro Abhitzekessel $(\text{Kosten}_{HZFL,fix})$" und

- den Beiträgen der einzelnen Heizflächen, die von der Heizflächengeometrie, den verwendeten Materialien und den gemäß der Kesselformel bestimmten Wandaufschlägen abhängen.

Die Kosten der einzelnen Heizflächen sind jeweils beeinflußt durch die beiden Kostenparameter

- Grundpreis der Heizflächen pro Quadratmeter $(\text{Preis}_{HZFL,m2})$ und

- Preis der Heizflächenrohre pro Kilogramm $(\text{Preis}_{HZFL,kg})$.

$$\text{Kosten}_{HZFL,Kessel} = \text{Kosten}_{HZFL,fix} + \sum_{HZFL\ i} \text{Kosten}_{HZFL\ i}(\text{Preis}_{HZFL,m^2}, \text{Preis}_{HZFL,kg})$$

Sowohl der Quadratmeter-Grundpreis als auch der Kilogramm-Preis sind materialabhängig.

**(D) Restkraftwerk**

Die Kosten des Restkraftwerks können auf zwei unterschiedliche Arten modelliert werden:

(i) als proportional zur Netto-Gesamtleistung des Kraftwerks;
Da in der Formel für die Stromerzeugungskosten die Investitionskosten durch die Nettogesamtleistung dividiert werden, ergibt dieser Ansatz lediglich eine für alle Auslegungsvarianten gleiche Konstante, d.h. die Kosten des Restkraftwerks spielen für die Optimierung keine Rolle.
(ii) als leistungsunabhängiger Sockelbetrag;
Wählt man diesen Ansatz, spielen die Kosten des Restkraftwerks sehr wohl eine Rolle für die Auslegungsoptimierung, da sich bei einer größeren Kraftwerkleistung der (auf's Jahr umgelegte) Sockelbetrag auf eine größere Anzahl von kWh verteilt.

Gewisse Teile des Restkraftwerks werden treffender durch Ansatz (i), andere durch Ansatz (ii) modelliert, jedoch ist die genaue Aufteilung nur sehr schwer zu ermitteln:

$$\text{Kosten}_{Restkraftwerk} = \text{Kosten}_{pro\ kW} \cdot P_{elek,GuD,netto} + \text{Kosten}_{Restkraftwerk,konatant}$$

Als letzte Gruppe von Kostenparametern werden die drei standortspezifischen Parameter

• Annuität,

• jährliche Betriebsstunden $(h_{Jahr})$ und

- Brennstoffkosten pro *kWh* Verbrennungswärme (*b*) untersucht, die innerhalb der Zielfunktion das Verhältnis zwischen Investitionskosten- und Brennstoffkosten-Anteil der Stromerzeugungskosten bestimmen.

**Prozessoreinheit**

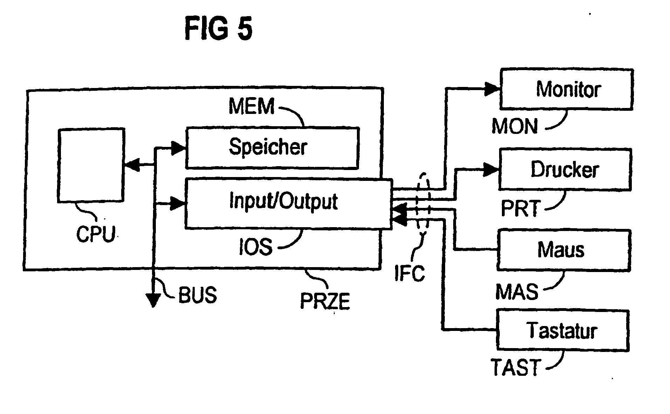

Fig.5 zeigt eine Prozessoreinheit PRZE, die geeignet ist zur Durchführung von Transformation und/oder Kompression/Dekompression. Die Prozessoreinheit PRZE umfaßt einen Prozessor CPU, einen Speicher MEM und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

Literaturverzeichnungs

[1]   S. Schäffler: Global Optimization Using Stochastic Integration, Roderer-Verlag, Regensburg 1995.

[2]   H. Ritter, T. Martinetz, K. Schulten: Neuronale Netze - Eine Einführung in die Theorie selbstorganisierender Netzwerke, Addison-Wesley, 1990.

[3]   X.Lei et al., "Optimization - A new Tool in a Simulation Programm System", IEEE Transactions on Power Systems, Bd. 12, Nr. 2, Mai 1997 (1997-05) S. 598-604, XP 000955372 USA

[4]   J. Rowland: "Optimal Digital Simulations for Random Linear Systems with Integration Constraints", Computer and Electrical Engineering, Bd. 1, Nr. 1, Juni 1973 (1973-06) S. 111-118, XP 000979920 UK

**Patentansprüche**

1.   Verfahren zur Simulation eines technischen Systems,

(a) bei dem in einem Optimierungsschritt für eine Zielfunktion, die abhängt von Einstellparametern zur Auslegung bzw. Reaktion des technischen Systems und von vorgegebenen Einstellkonstanten, die während der Optimierung nicht variiert werden können, die Einstellparameter optimiert werden;
(b) bei dem abhängig von einer vorgegebenen Belegung der Einstellparameter anhand einer Anfrage an eine externe Quelle ein Ergebnis in Form eines Einflusses der Einstellparameter auf das technische System bestimmt wird;
(c) bei dem das Ergebnis zwischengespeichert wird;
(d) bei dem anhand des Ergebnisses und der Einstellkonstanten das technische System simuliert wird;
(e) bei dem die Zielfunktion zuerst hinsichtlich ihrer Einstellparameter optimiert und danach den Einfluss der Einstellkonstanten bei der Simulation, von dieser Optimierung getrennt berücksichtigt wird;
(f) bei dem die Simulation des technischen Systems eingesetzt wird, um eine Sensitivität von Belegungen der Einstellparameter gegenüber Veränderungen der Einstellkonstanten zu bestimmen.

2.   Verfahren nach Anspruch 1,
bei dem anhand der Simulation ein Entwurf des technischen Systems durchgeführt wird.

3.   Verfahren nach Anspruch 2,
bei dem der Entwurf eine Anpassung, eine Veränderung oder ein Neuentwurf des technischen Systems ist.

4.   Verfahren nach einem der vorhergehenden Ansprüche,
bei dem eine erneute Bestimmung des Einflusse der Einstellparameter auf das technische System durch Zugriff auf das zwischengespeicherte Ergebnis bestimmt wird.

5.   Verfahren nach einem der vorhergehenden Ansprüche,

bei dem für eine Vielzahl von Belegungen der Einstellparameter jeweils deren Einfluss auf das technische System durch Anfrage an die externe Quelle ermittelt und das Ergebnis dieser Anfrage zwischengespeichert wird.

**6.** Verfahren nach Anspruch 5,
bei dem ein zusätzlicher Einfluss anhand der zwischengespeicherten Ergebnisse ermittelt wird.

**7.** Verfahren nach Anspruch 6,
bei dem der zusätzliche Einfluss durch Interpolation oder
Extrapolation ermittelt wird.

**8.** Verfahren nach Anspruch 6,
bei dem der zusätzliche Einfluss anhand eines neuronalen Netzes anhand der Ergebnisse ermittelt wird.

**9.** Verfahren nach einem der vorhergehenden Ansprüche,
bei dem die externe Quelle ein Simulator oder ein Experiment ist.

**10.** Verfahren nach einem der vorhergehenden Ansprüche,
bei dem die Simulation mit einer Vielzahl von Ergebnissen ohne die externe Quelle durchgeführt wird.

**11.** Anordnung zur Simulation eines technischen Systems, mit einer Prozessoreinheit und mit einem Speicher, auf dem ein Programm gespeichert ist, welches bei seiner Ausführung auf der Prozessoreinheit ein Verfahren durchführt, bei dem

(a) in einem Optimierungsschritt für eine Zielfunktion, die abhängt von Einstellparametern zur Auslegung bzw. Reaktion des technischen Systems und von vorgegebenen Einstellkonstanten, die während der Optimierung nicht variiert werden können, die Einstellparameter optimiert werden;
(b) abhängig von einer vorgegebenen Belegung der Einstellparameter anhand einer Anfrage an eine externe Quelle ein Ergebnis in Form eines Einflusses der Einstellparameter auf das technische System bestimmt wird;
(c) das Ergebnis zwischengespeichert wird;
(d) anhand des Ergebnisses und der Einstellkonstanten das technische System simuliert wird;
(e) bei dem die Zielfunktion zuerst hinsichtlich ihrer Einstellparameter optimiert und danach den Einfluss der Einstellkonstanten bei der Simulation, von dieser Optimierung getrennt berücksichtigt wird;
(f) bei dem die Simulation des technischen Systems eingesetzt wird, um eine Sensitivität von Belegungen der Einstellparameter gegenüber Veränderungen der Einstellkonstanten zu bestimmen.

**12.** Computerprogrammerzeugnis zur Simulation eines technischen Systems, mit einem Speicher, auf dem ein Programm gespeichert ist, welches bei seiner Ausführung auf einem Rechner ein Verfahren durchführt, bei dem:

(a) in einem Optimierungsschritt für eine Zielfunktion, die abhängt von Einstellparametern zur Auslegung bzw. Reaktion des technischen Systems und von vorgegebenen Einstellkonstanten, die während der Optimierung nicht variiert werden können, die Einstellparameter optimiert werden;
(b) abhängig von einer vorgegebenen Belegung der Parameter anhand einer Anfrage an eine externe Quelle ein Ergebnis in Form eines Einflusses der Parameter auf das technische System bestimmt wird;
(c) das Ergebnis zwischengespeichert wird;
(d) anhand des Ergebnisses und der Einstellkonstanten das technische System simuliert wird;
(e) bei dem die Zielfunktion zuerst hinsichtlich ihrer Einstellparameter optimiert und danach den Einfluss der Einstellkonstanten bei der Simulation, von dieser Optimierung getrennt berücksichtigt wird;
(f) bei dem die Simulation des technischen Systems eingesetzt wird, um eine Sensitivität von Belegungen der Einstellparameter gegenüber Veränderungen der Einstellkonstanten zu bestimmen.

**Claims**

**1.** Method for simulation of a technical system,

(a) in which the setting parameters are optimized in an optimizing step for a required function, which depends on setting parameters for the design and reaction of the technical system and on predetermined setting constants, which cannot be varied during the optimization process;

(b) in which a result in the form of any influence of the setting parameters on the technical system is determined as a function of a predetermined set of setting parameters and on the basis of a request to an external source;
(c) in which the result is temporarily stored; and
(d) in which the technical system is simulated on the basis of the result and of the setting constants;
(e) in which the setting parameters of the required function are first of all optimized, and the influence of the setting constants on the simulation is then considered separately from this optimization;
(f) in which the simulation of the technical system is used to determine the sensitivity of sets of setting parameters to changes in the setting constants.

2. Method according to Claim 1,
in which the technical system is designed on the basis of the simulation.

3. Method according to Claim 2,
in which the design process comprises adaptation of, a change to, or a redesign of the technical system.

4. Method according to one of the preceding claims,
in which the influence of the setting parameters on the technical system is redetermined by accessing the temporarily stored result.

5. Method according to one of the preceding claims,
in which the influence of each of a large number of sets of setting parameters on the technical system is determined by checking the external source, and the result of this check is temporarily stored.

6. Method according to Claim 5,
in which an additional influence is determined on the basis of the temporarily stored results.

7. Method according to Claim 6,
in which the additional influence is determined by interpolation or extrapolation.

8. Method according to Claim 6,
in which the additional influence is determined from the results using an neural network.

9. Method according to one of the preceding claims,
in which the external source is a simulator or an experiment.

10. Method according to one of the preceding claims,
in which the simulation is carried out using a large number of results, without the external source.

11. Arrangement for simulation of a technical system,
with a processor unit and with a memory, in which a program is stored which carries out a process while it is being run on the processor unit, in which:

(a) the setting parameters are optimized in an optimizing step for a required function, which depends on setting parameters for the design and reaction of the technical system and on predetermined setting constants, which cannot be varied during the optimization process;
(b) a result in the form of an influence of the setting parameters on the technical system can be determined as a function of a predetermined set of setting parameters and on the basis of a request to an external source;
(c) the result can be temporarily stored; and
(d) the technical system can be simulated on the basis of the result and of the setting constants;
(e) in which the setting parameters of the required function are first of all optimized, and the influence of the setting constants on the simulation is then considered separately from this optimization;
(f) in which the simulation of the technical system is used to determine the sensitivity of sets of setting parameters to changes in the setting constants.

12. Computer program product for simulation of a technical system, with a memory in which a program is stored, which carries out a process while it is being run on a computer,
in which:

(a) the setting parameters are optimized in an optimizing step for a required function, which depends on setting parameters for the design and reaction of the technical system and on predetermined setting constants, which cannot be varied during the optimization process;

(b) a result in the form of any influence of the parameters on the technical system is determined as a function of a predetermined set of parameters and on the basis of a request to an external source;

(c) the result is temporarily stored; and

(d) the technical system is simulated on the basis of the result and of the setting constants;

(e) in which the setting parameters of the required function are first of all optimized, and the influence of the setting constants on the simulation is then considered separately from this optimization;

(f) in which the simulation of the technical system is used to determine the sensitivity of sets of setting parameters to changes in the setting constants.

**Revendications**

1. Procédé de simulation d'un système technique, dans lequel

(a) dans une étape d'optimisation d'une fonction d'objectif qui dépend de paramètres de réglage, pour obtenir la modélisation resp. la réaction du système technique, et de constantes de réglage prédéterminées qui ne peuvent être modifiées pendant l'optimisation, les paramètres de réglage sont optimisés;

(b) en fonction de valeurs prédéterminées des paramètres de réglage, à l'aide d'une interrogation d'une source externe, un résultat qui présente la forme d'une influence des paramètres de réglage sur le système technique est déterminé;

(c) le résultat est mémorisé temporairement;

(d) le système technique est simulé à l'aide du résultat et des constantes de réglage ;

(e) la fonction d'objectif est d'abord optimisée du point de vue de ses paramètres de réglage et l'influence des constantes de réglage lors de la simulation est prise en compte ensuite, séparément par rapport à cette optimisation ;

(f) la simulation du système technique est utilisée pour déterminer la sensibilité de valeurs de paramètres de réglage par rapport à des modifications des constantes de réglage.

2. Procédé selon la revendication 1, dans lequel on réalise un projet du système technique à l'aide de la simulation.

3. Procédé selon la revendication 2, dans lequel le projet est une adaptation, une modification ou le développement nouveau d'un système technique.

4. Procédé selon l'une des revendications précédentes, dans lequel on réalise une nouvelle détermination des influences des paramètres de réglage sur le système technique par accès aux résultats mémorisés temporairement.

5. Procédé selon l'une des revendications précédentes, dans lequel on détermine l'influence d'une pluralité de valeurs des paramètres de réglage sur le système technique par interrogation de la source externe, le résultat de cette interrogation étant mémorisé temporairement.

6. Procédé selon la revendication 5, dans lequel on détermine une influence supplémentaire à l'aide des résultats mémorisés temporairement.

7. Procédé selon la revendication 6, dans lequel on détermine l'influence supplémentaire par interpolation ou extrapolation.

8. Procédé selon la revendication 6, dans lequel on détermine l'influence supplémentaire à l'aide d'un réseau neural à l'aide des résultats.

9. Procédé selon l'une des revendications précédentes, dans lequel la source externe est un simulateur ou une expérience.

10. Procédé selon l'une des revendications précédentes, dans lequel on réalise la simulation avec une pluralité de résultats sans la source externe.

11. Agencement pour la simulation d'un système technique, avec une unité de processeur et une mémoire sur laquelle est conservé un programme qui, lorsqu'il est exécuté sur l'unité processeur, exécute un procédé dans lequel

(a) dans une étape d'optimisation d'une fonction d'objectif qui dépend de paramètres de réglage, pour obtenir la modélisation resp. la réaction du système technique, et de constantes de réglage prédéterminées qui ne peuvent être modifiées pendant l'optimisation, les paramètres de réglage sont optimisés;

(b) en fonction de valeurs prédéterminées des paramètres de réglage, à l'aide d'une interrogation d'une source externe, un résultat qui présente la forme d'une influence des paramètres de réglage sur le système technique est déterminé;

(c) le résultat est mémorisé temporairement;

(d) le système technique est simulé à l'aide du résultat et des constantes de réglage ;

(e) la fonction d'objectif est d'abord optimisée du point de vue de ses paramètres de réglage et l'influence des constantes de réglage lors de la simulation est prise en compte ensuite, séparément par rapport à cette optimisation ;

(f) la simulation du système technique est utilisée pour déterminer la sensibilité de valeurs de paramètres de réglage par rapport à des modifications des constantes de réglage.

12. Produit de programme informatique pour la simulation d'un système technique, avec une mémoire sur laquelle est conservé un programme qui, lorsqu'il est exécuté sur un ordinateur, exécute un procédé dans lequel :

(a) dans une étape d'optimisation d'une fonction d'objectif qui dépend de paramètres de réglage, pour obtenir la modélisation resp. la réaction du système technique, et de constantes de réglage prédéterminées qui ne peuvent être modifiées pendant l'optimisation, les paramètres de réglage sont optimisés;

(b) en fonction de valeurs prédéterminées des paramètres, à l'aide d'une interrogation d'une source externe, un résultat qui présente la forme d'une influence des paramètres sur le système technique est déterminé

(c) le résultat et mémorisé temporairement ;

(d) le système technique est simulé à l'aide du résultat et des constantes de réglage ;

(e) la fonction d'objectif est d'abord optimisée du point de vue de ses paramètres de réglage et l'influence des constantes de réglage lors de la simulation est prise en compte ensuite, séparément par rapport à cette optimisation ;

(f) la simulation du système technique est utilisée pour déterminer la sensibilité de valeurs de paramètres de réglage par rapport à des modifications des constantes de réglage.

## FIG 1

Optimierungs-Software (Framework) — 101

$\chi$ ↓  ↑ $F(\chi)$

Zielfunktions-Auswertung — 102

Kraftwerks-Anbindung — 105

Simulator — 106

103 — Kosten-Konstanten

104 — Protokoll-Datei

## FIG 2

Optimierungs-Software (Framework)

$\chi$ ↓  ↑ $F(\chi)$

Zielfunktions-Auswertung

Simulations-Schnittstelle — 201

Kraftwerks-Anbindung

Simulator

Protokoll-Datei

Kosten-Konstanten

Simulations-Datenbank — 202

**FIG 3**

```
┌──────────────┐
│   Gitter-    │
│ Abrasterung  │──┐
└──────────────┘  │ 301
     │  ↑
   χ │  │
     ↓  │
┌──────────────┐   ┌──────────────┐   ┌──────────────┐   ┌ ─ ─ ─ ─ ─ ┐
│ Zielfunktions-│←→│  Simulations- │←→│  Kraftwerks-  │←→│           │
│  Auswertung   │   │ Schnittstelle │   │  Anbindung    │   │           │
└──────────────┘   └──────────────┘   └──────────────┘   │           │
   ↑      │            │                                   │           │
   │      ↓            ↓                                   │ Simulator │
   │  ┌─────────┐  ┌──────────────┐                        └ ─ ─ ─ ─ ─ ┘
   │  │Protokoll-│  │ Simulations- │
   │  │  Datei   │  │  Datenbank   │
   │  └─────────┘  └──────────────┘
┌──────────────┐
│   Kosten-    │
│  Konstanten  │
└──────────────┘
```

**FIG 4**

```
          ┌──────────────┐
          │  Datenbank-  │
          │  Auswertung  │──┐ 401
          └──────────────┘  │
               ↕
┌──────────────┐   ┌──────────────┐
│ Zielfunktions-│←─│  Simulations- │── 402  ⚡
│  Auswertung   │   │ Schnittstelle │
└──────────────┘   └──────────────┘
   ↑      │            ↑
   │      ↓            │
   │  ┌─────────┐      │
   │  │Protokoll-│     │
   │  │  Datei   │     │
   │  └─────────┘      │
┌──────────────┐  ┌──────────────┐
│   Kosten-    │  │ Simulations- │
│  Konstanten  │  │  Datenbank   │
└──────────────┘  └──────────────┘
```

## FIG 5

**EP 1 214 631 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **X.LEI et al.** Optimization - A new Tool in a Simulation Programm System. *IEEE Transactions on Power Systems,* Mai 1997, vol. 12 (2), 598-604

- **J. ROWLAND.** Optimal Digital Simulations for Random Linear Systems with Integration Constraints. *Computer and Electrical Engineering,* Juni 1973, vol. 1 (1), 111-118